# EUROPEAN PATENT SPECIFICATION

(11) **EP 0 305 607 B1**
(45) Date of publication and mention of the grant of the patent: **13.01.1993**
(21) Application number: 87202093.8
(22) Date of filing: 27.06.1983
(51) Int. Cl.: C01B 33/34

(54) **Process for preparing mordenite**
Verfahren zur Herstellung von Mordenit
Procédé de préparation de mordénite

(30) Priority: 01.07.1982 IT 2217682
(43) Date of publication of application: 08.03.1989
(62) Divisional of application: 83200948.4
(73) Proprietor: SNAMPROGETTI S.p.A., I-20121 Milan (IT)
(72) Inventor: Notari, Bruno, I-20097 San Donato Milanese Milan (IT); Manara, Giovanni, I-20097 San Donato Milanese Milan (IT); Bellussi, Giuseppe, I-29100 Piacenza (IT); Taramasso, Marco, Deceased (IT)
(74) Representative: Roggero, Sergio

(56) References cited:
- EP-A- 0 040 104
- US-A- 4 175 114
- "SBU BASED ZEOLITES FROM WHOLLY INORGANIC SYSTEMS", BELLUSSI ET AL , INNOVATION IN ZEOLITE MATERIALS SCIENCE, pages 37-44, ELSEVIER (1988)

## Description

This invention relates to a process for producing mordenite, which is a porous crystalline zeolite, and is a division of EP-A-98 641. Generally speaking, zeolites having a high SiO₂ to Al₂O₃ ratio of 10 and over are characterized by a high thermal stability, which makes it possible to use such zeolites for a number of practical applications.

These zeolites are characterized by structural sub-units consisting of 5-tetrahedron rings: among these, the zeolites of the mordenite family are notable, and they encompass ferrierite, dachiardite, epistilibite and bikitaite.

A survey of the prior art shows that US-A 4 175 114 discloses that a mixture having a molar ratio of OH⁻ to SiO₂ between 0,05 and 0,3 produces ZSM-5 zeolites rather than mordenite, the more so that it could be presumed, on the basis of the teachings of EP-A-40104 that the OH:SiO₂ ratio may vary between 0,2 and 0,8.

The teachings of these two prior art disclosures are thus mutually conflicting, as table C of US-A 4 175 114 clearly establishes that, to obtain ZSM-5 and not mordenite, the OH⁻/SiO₂ ratio may vary between 0,1 and 0,8, a still preferred range lying between 0,2 and 0,75.

Therefore, the technical teaching of US-A 4 175 114 is that the OH⁻:SiO₂ ratio, in EP-A-40104, which is adapted to produce mordenite, must be outside the range between 0,07 and 1, or, at the most, outside the range between 0,2 and 0,75.

The EP-A-30811 proposes to synthesize zeolites with a silica: alumina ratio greater than 12 without using organic compounds such as alcohols, tetraalkylammonium ions or alkylene oxides.

US-A-4 257 885 describes a synthetic zeolite prepared in the absence of organic substances or ammoniacal substances, by using colloidal silica as the silicon source.

It has been found that, by controlling certain critical factors, such as the SiO₂:Al₂O₃ ratio and the molar ratio OH⁻:SiO₂ of the hydroxyl concentration (determined by titration) to the silica, it is possible to prepare large-pore mordenites of a high silica content.

Therefore, according to the invention, there is provided a process for the preparation of mordenite having in its anhydrous condition the formula:

Me₂O.Al₂O₃.xSiO₂

wherein Me is an alkali metal and x is comprised between 10 and 20, characterized by comprising the steps of contacting in an aqueous medium sodium silicate with an aluminium compound, with a molar ratio SiO₂ to Al₂O₃ comprised between 10 and 200, in the presence of one or more alkali metal hydroxides, with a molar ratio Me⁺:SiO₂ higher than 0,6, and also in the presence of a mineralizing agent, working at a temperature comprised between 20°C and 100°C, checking that the molar ratio OH⁻:SiO₂ of the resultant mixture is comprised between 0,2 and 0,8, said resultant mixture being caused to crystallize with said hydroxyl to SiO₂ ratio in an enclosure for a period of from a few hours to 40 days at a temperature comprised between 100°C and 200°C.

Preferably, the molar ratio Me⁺:SiO₂ is comprised between 0,66 and 0,96.

A still preferable combination of conditions is that in which the molar ratio SiO₂:Al₂O₃ is between 15 and 200 and the molar ratio OH⁻:SiO₂ is comprised between 0,2 and 0,50.

The crystallization temperature is preferably comprised between 150°C and 180°C.

The mineralizing agents are preferably selected among sodium sulphate, potassium sulphate, sodium phosphate, potassium prosphate, sodium chloride and potassium chloride.

The alkali metal hydroxides are selected from among LiOH, NaOH and KOH.

Finally, the aluminium compound is selected from among sodium aluminate, aluminium sulphate, aluminium chloride and trihydrous alumina.

It is actually surprising that, by varying the OH⁻:SiO₂ ratio properly, it becomes possible to aim at a process for preparing a zeolite preferentially over another.

The invention will now be illustrated in more detail with the aid of a few illustrative examples.

### EXAMPLES 1-14

The reaction mixture is prepared from sodium silicate (26.03 weight% SiO₂; 8.97 weight% Na₂; 65 weight% H₂O) and from aluminium sulphate Al₂ (So₄)₃.16H₂O (Al₂O₃ = 17 weight%).

The sodium silicate is dissolved in distilled water containing the required quantity of NaOH to obtain the required OH⁻/SiO₂ ratio, and the aluminium sulphate is separately dissolved in water (possibly containing sulphuric acid).

The second solution is added to the first under vigorous agitation, and the mixture heated to 80°C.

The gel obtained in this manner is transferred to an autoclave and kept at a temperature of 176°C under agitation.

The reagent composition, the crystallisation time and the nature of the zeolite produced are given in Table 1. The molar SiO₂/Al₂O₃ ratios of the mordenites obtained vary between 16 and 19.

In all the described examples, the salt added as mineralising agent is sodium sulphate, but in Example 8 a mixture of sodium and potassium is used.

In Examples 1, 3 and 5, the addition of different zeolite nuclei equally gave rise to the formation of mordenite, whereas in Example 8 mordenite nuclei were added.

In all cases the zeolite obtained is that corresponding to the OH⁻/SiO₂ ratio, and not that corresponding to the nuclei.

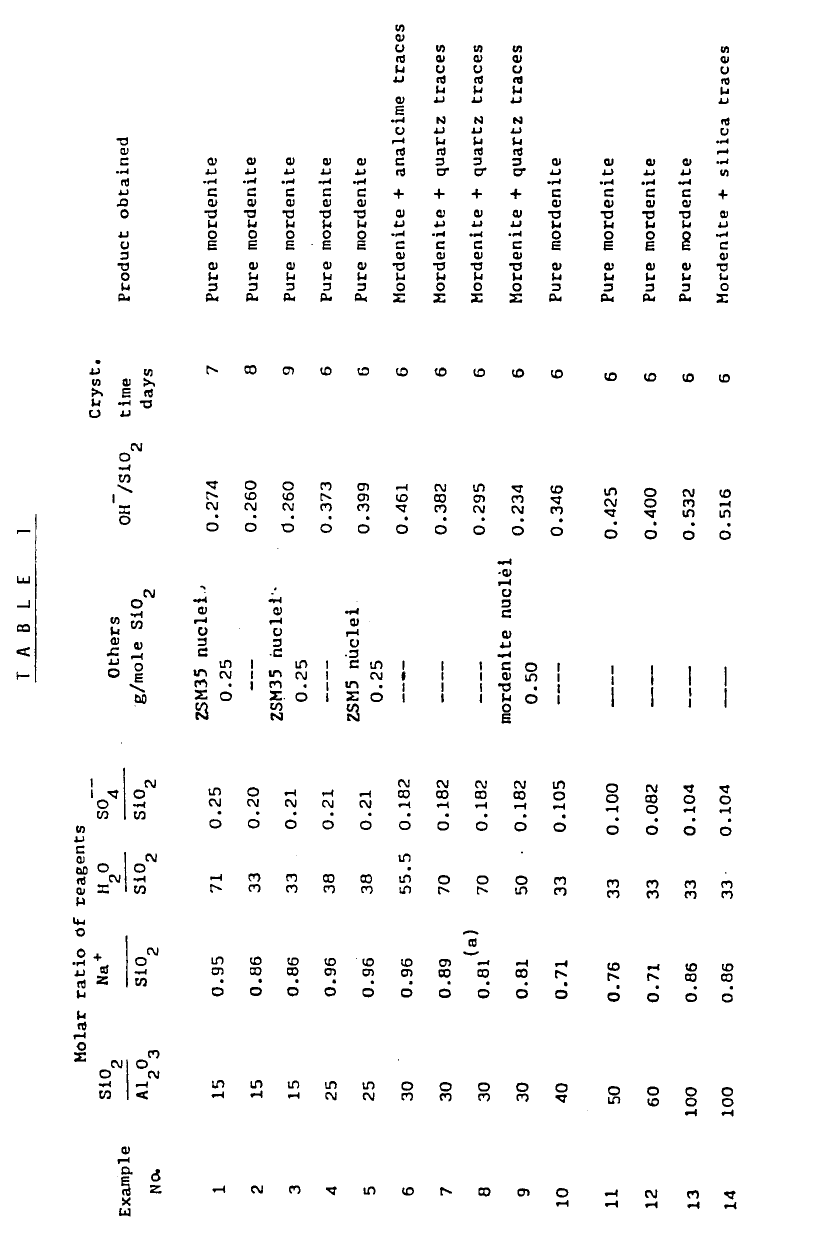

## Claims

1. A process for the preparation of a mordenite having in its anhydrous condition the formula:
Me₂O.Al₂O₃.xSiO₂
wherein Me is an alkali metal and x is comprised between 10 and 20, characterized by comprising the steps of contacting in an aqueous medium sodium silicate with an aluminium compound, with a molar ratio SiO₂ to Al₂O₃ comprised between 10 and 200, in the presence of one or more alkali metal hydroxides, with a molar ratio Me⁺:SiO₂ higher than 0,6, and also in the presence of a mineralizing agent, working at a temperature comprised between 20°C and 100°C, checking that the molar ratio OH⁻:SiO₂ of the resultant mixture is comprised between 0,2 and 0,8, said resultant mixture being caused to crystallize with said hydroxyl to SiO₂ ratio in an enclosure for a period of from a few hours to 40 days at a temperature comprised between 100°C and 200°C.

2. Process according to claim 1, characterized in that the molar ratio Me⁺:SiO₂ is comprised between 0,66 and 0,96.

3. Process according to claim 1, characterized in that the molar ratio SiO₂:Al₂O₃ is comprised between 15 and 200 and the molar ratio OH⁻:SiO₂ is comprised between 0,25 and 0,50.

4. Process according to claim 1, characterized in that the crystallization temperature is comprised between 150°C and 180°C.

5. Process according to claim 1, characterized in that the mineralizing agents are selected from among sodium sulphate, potassium sulphate, sodium phosphate, potassium phosphate, sodium chloride and potassium chloride.

6. Process according to claim 1, characterized in that the alkali metal hydroxide are selected from among LiOH, NaOH and KOH.

7. Process according to claim 1, wherein the aluminium compound is selected from among sodium aluminate, aluminium sulphate, aluminium chloride and trihydrous alumina.

## Patentansprüche

1. Verfahren zur Herstellung eines Mordenits, der in wasserfreier Form die Formel
Me₂O.Al₂O₃.xSiO₂
aufweist, wobei Me ein Alkalimetall ist und x zwischen 10 und 20 liegt, dadurch gekennzeichnet, daß es die folgenden Stufen umfaßt: Zusammenbringen von Natriumsilicat mit einer Aluminiumverbindung mit einem Molverhältnis SiO₂ zu Al₂O₃ zwischen 10 und 200 in einem wäßrigen Medium in Gegenwart von einem oder mehreren Alkalimetallhydroxiden mit einem Molverhältnis Me⁺:SiO₂ größer 0,6 sowie in Gegenwart eines Mineralisierungsmittels, Arbeiten bei einer Temperatur zwischen 20 und 100°, Kontrollieren, daß das Molverhältnis OH⁻:SiO₂ des erhaltenen Gemisches zwischen 0,2 und 0,8 liegt, wobei das Gemisch mit dem angegebenen Verhältnis Hydroxyl zu SiO₂ unter Verschluß während eines Zeitraumes von wenigen Stunden bis zu 40 Tagen bei einer Temperatur zwischen 100 und 200°C zum Kristallisieren gebracht wird.

2. Verfahren nach Anspruch 1, dadurch gekennzeichnet, daß das Molverhältnis Me⁺:SiO₂ zwischen 0,66 und 0,96 liegt.

3. Verfahren nach Anspruch 1, dadurch gekennzeichnet, daß das Molverhältnis SiO₂:Al₂O₃ zwischen 15 und 200 und das Molverhältnis OH⁻:SiO₂ zwischen 0,25 und 0,50 liegt.

4. Verfahren nach Anspruch 1, dadurch gekennzeichnet, daß die Kristallisationstemperatur zwischen 150 und 180°C liegt.

5. Verfahren nach Anspruch 1, dadurch gekennzeichnet, daß die Mineralisierungsmittel ausgewählt sind aus Natriumsulfat, Kaliumsulfat, Natriumphosphat, Kaliumphosphat, Natriumchlorid und Kaliumchlorid.

6. Verfahren nach Anspruch 1, dadurch gekennzeichnet, daß das Alkalimetallhydroxid ausgewählt ist aus LiOH, NaOH und KOH.

7. Verfahren nach Anspruch 1, wobei die Aluminiumverbindung ausgewählt ist aus Natriumaluminat, Aluminiumsulfat, Aluminiumchlorid und Tonerdetrihydrat.

## Revendications

1. Procédé de préparation d'une mordénite présentant, à l'état anhydre, la formule
Me₂O.Al₂O₃.xSiO₂
dans laquelle Me représente un métal alcalin et x vaut entre 10 et 20, caractérisé en ce qu'il comporte les étapes consistant à mettre un silicate de sodium en contact avec un composé de l'aluminium, en milieu aqueux, le rapport molaire de SiO₂ à Al₂O₃ valant entre 10 et 200, en présence d'un ou de plusieurs hydroxydes de métal alcalin, le rapport molaire Me⁺/SiO₂ étant supérieur à 0,6, et aussi en présence d'un agent de minéralisation, en opérant à une température comprise entre 20°C et 100°C, à vérifier que le rapport molaire OH⁻/SiO₂ du mélange résultant se situe entre 0,2 et 0,8, et à provoquer la cristallisation dudit mélange résultant, présentant ledit rapport des ions hydroxyle à SiO₂ , dans une enceinte, pendant une période allant de quelques heures à 40 jours, à une température comprise entre 100°C et 200°C.

2. Procédé conforme à la revendication 1, caractérisé en ce que le rapport molaire Me⁺/SiO₂ se situe entre 0,66 et 0,96.

3. Procédé conforme à la revendication 1, caractérisé en ce que le rapport molaire SiO₂/Al₂O₃ se situe entre 15 et 200 et en ce que le rapport molaire OH⁻/SiO₂ se situe entre 0,25 et 0,50.

4. Procédé conforme à la revendication 1, caractérisé en ce que la température de cristallisation se situe entre 150°C et 180°C.

5. Procédé conforme à la revendication 1, caractérisé en ce que l'agent de minéralisation est choisi parmi le sulfate de sodium, le sulfate de potassium, le phosphate de sodium, le phosphate de potassium, le chlorure de sodium et le chlorure de potassium.

6. Procédé conforme à la revendication 1, caractérisé en ce que le ou les hydroxydes de métal alcalin sont choisis parmi LiOH, NaOH et KOH.

7. Procédé conforme à la revendication 1, dans lequel le composé de l'aluminium est choisi parmi l'aluminate de sodium, le sulfate d'aluminium, le chlorure d'aluminium et l'alumine trihydratée.
